# EUROPEAN PATENT SPECIFICATION

(11) **EP 4 020 309 B1**
(45) Date of publication and mention of the grant of the patent: **16.10.2024**
(21) Application number: 20858226.2
(22) Date of filing: 03.08.2020
(51) Int. Cl.: G06V 40/13, G02B 3/00, G02B 27/30

(54) **FINGERPRINT APPARATUS, AND ELECTRONIC DEVICE AND METHOD FOR MANUFACTURING SAME**
FINGERABDRUCKGERÄT UND ELEKTRONISCHES GERÄT SOWIE VERFAHREN ZU SEINER HERSTELLUNG
APPAREIL D'EMPREINTES DIGITALES, DISPOSITIF ÉLECTRONIQUE ET PROCÉDÉ DE FABRICATION ASSOCIÉ

(30) Priority: 30.08.2019 CN 201910816948
(43) Date of publication of application: 29.06.2022
(73) Proprietor: Huawei Technologies Co., Ltd., Longgang District Shenzhen, Guangdong 518129 (CN)
(72) Inventor: CAI, Qi, Shenzhen, Guangdong 518129 (CN); FAN, Cong, Shenzhen, Guangdong 518129 (CN); LIN, Jiao, Shenzhen, Guangdong 518129 (CN); PENG, Xu, Shenzhen, Guangdong 518129 (CN)
(74) Representative: Gill Jennings & Every LLP
(86) International application number: PCT/CN2020/106632
(87) International publication number: WO 2021/036703

(56) References cited:
- WO-A1-2018/135780
- CN-A- 109 791 610
- CN-A- 109 791 610
- CN-A- 109 791 612
- CN-A- 110 175 492
- CN-A- 110 674 699
- CN-U- 208 848 221
- US-A1- 2020 218 920

## Description

### TECHNICAL FIELD

This application relates to the field of electronic device technologies, and in particular, to a fingerprint apparatus, an electronic device, and a manufacturing method thereof.

### BACKGROUND

With development of science and technology, an electronic device has been basically popularized in all aspects of people's living environment. To make it more convenient for the electronic device to serve people, information exchange between the electronic device and people is crucial. An electronic device such as a mobile phone is used as an example. Information exchange between the mobile phone and a human mainly includes keyboard pressing, screen touching, wireless communication, voice input, facial recognition, fingerprint recognition, and the like. Fingerprint recognition has been widely used in operations such as unlocking and payment in the mobile phone for uniqueness and convenience.

The mobile phone is used as an example. An existing fingerprint recognition system is usually disposed at a position at which a front physical button is located, disposed on a back, and disposed below a display screen. Nowadays, full-screen display is an important development direction and a technical selling point for future electronic devices such as a mobile phone, and an in-screen fingerprint recognition technology corresponding to full-screen display can draw more attention for user-friendliness. Currently, common in-screen fingerprint recognition technologies include an optical fingerprint recognition technology, a capacitive fingerprint recognition technology, an ultrasonic fingerprint recognition technology, and the like. To improve competitiveness of electronic devices such as the mobile phone, impact of a fingerprint apparatus on architecture design of the electronic devices such as the mobile phone needs to be minimized, and more attention needs to be paid on impact of a location of the fingerprint apparatus in the electronic device and a thickness and an area of the fingerprint apparatus on the architecture design. An existing fingerprint apparatus cannot receive a fingerprint image at a relatively long distance, and therefore usually needs to be installed through attachment to a screen. It is relatively difficult to implement installation through attachment to the screen, and there is a problem that the display screen is scrapped due to poor attachment. CN 109 791 612 A discloses a fingerprint identification device which includes a micro- telecentric lens array group, for receiving optical signal reflected from a human finger and a fingerprint sensor set to the lower section of micro- telecentric lens array group. CN 208 848 221 U discloses an optical fingerprint identification device able that includes a light detection array, a first shading layer formed above the light detection array, wherein the first shading layer is provided with multiple light passing apertures, a first microlens array set to above first shading layer, wherein the first microlens array is used to converge optical signal to the multiple light passing apertures of the first shading layer, and the optical signal is transmitted to the light detection array by the multiple light passing apertures of the first shading layer. CN 109 791 610 A discloses a fingerprint identification device, to be applied on a electronic equipment, which includes a support plate, at least one fingerprint sensor chip set to the upper surface of the support plate, wherein the support plate is used to be mounted on the center of the electronic equipment.

### SUMMARY

The present invention is defined by the appended claims.

An installation position is flexible, and therefore a problem that a screen is scrapped due to installation of the fingerprint apparatus through attachment to the screen can be avoided.

### BRIEF DESCRIPTION OF DRAWINGS

FIG. 1 is a schematic stacking diagram of an architecture of an existing electronic device;
FIG. 2 is a schematic structural diagram of a first fingerprint apparatus in the prior art;
FIG. 3 is a schematic structural diagram in which a first fingerprint apparatus in the prior art is installed in an electronic device;
FIG. 4 is a schematic structural diagram of a second fingerprint apparatus in the prior art;
FIG. 5 is a schematic structural diagram in which a second fingerprint apparatus in the prior art is installed in an electronic device;
FIG. 6 is a schematic structural diagram of a fingerprint apparatus according to an embodiment of this application;
FIG. 7 is a schematic structural diagram of detecting fingerprint information by a fingerprint apparatus according to an embodiment of this application;
FIG. 8 is a schematic structural diagram of a collimator of a fingerprint apparatus according to an embodiment of this application;
FIG. 9 is a schematic structural diagram in which no first microlens unit is disposed for a collimator hole of a fingerprint apparatus according to an embodiment of this application;
FIG. 10 is a schematic structural diagram in which a first microlens unit is disposed for a collimator hole of a fingerprint apparatus according to an embodiment of this application;
FIG. 11 is a schematic structural diagram in which a second microlens unit is disposed in a fingerprint apparatus according to an embodiment of this application;
FIG. 12 is a schematic structural diagram in which a fingerprint apparatus includes a flexible circuit board according to an embodiment of this application;
FIG. 13 is a schematic cross-sectional structural diagram of an electronic device according to an embodiment of this application; and
FIG. 14 is an exploded diagram in which a display screen, a fingerprint apparatus, and a middle frame of an electronic device are installed through fitting according to an embodiment of this application.

### Reference numerals:

01: Screen; 02: Fastening frame; 03: Battery region; 04: Non-battery region; 05: Fingerprint apparatus; 051: Image sensor; 052: Collimation component; 053: Lens structure; 100: Fingerprint apparatus; 101: Fingerprint image sensor; 102: Collimator; 1021: Collimator hole; 103: First microlens group; 1031: First microlens unit; 104: Second microlens group; 1041: Second microlens unit; 105: Flexible circuit board; 200: Display screen; 300: Middle frame; 301: Groove; 302: Middle frame body; 303: Middle frame support member; 304: Mounting hole; 400: Battery module; 500: Battery region; and 600: Non-battery region.

### DESCRIPTION OF EMBODIMENTS

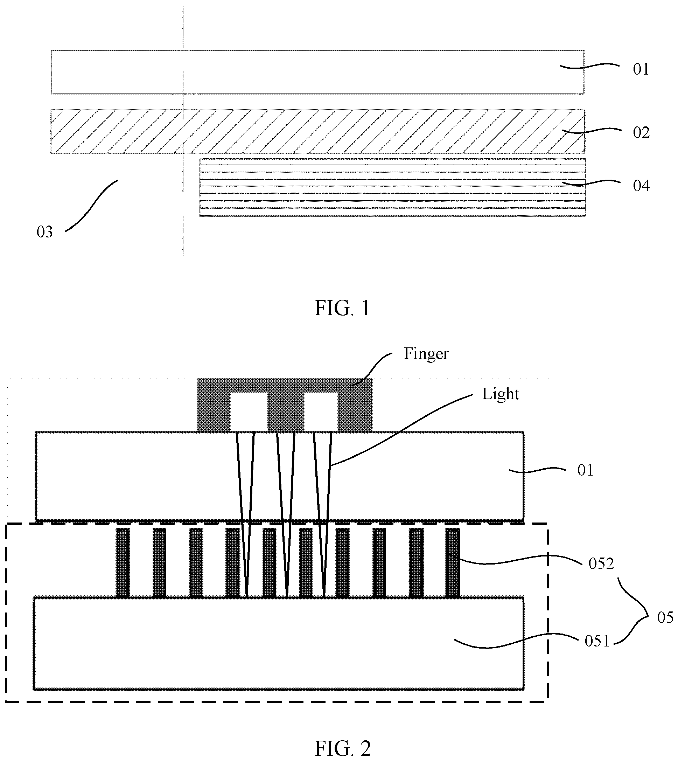

To facilitate understanding of the solutions, related structure stacking related to installation of a fingerprint apparatus in an electronic device is briefly described herein. FIG. 1 is a schematic stacking diagram of a typical architecture of an existing electronic device such as a mobile phone. The architecture includes a screen 01 and a fastening frame 02. Space below the fastening frame 02 may be divided into a battery region 03 and a non-battery region 04 based on different disposed parts. The battery region 03 is used to accommodate a power supply. The non-battery region 04 is used to accommodate other optional electronic elements such as a circuit board, a speaker box, a motor, and a camera. Based on the architecture, a fingerprint apparatus is placed below the screen 01. The fingerprint apparatus may be fastened to the screen 01 or the fastening frame 02. In addition, the fingerprint apparatus may be located above the battery region 03 or the non-battery region 04. Due to a limitation of a structure or the prior art, in the foregoing solution of positions for disposing the fingerprint apparatus, there is a possibility that the fingerprint apparatus cannot be disposed at some of the positions, or there may be some problems after implementation. For example, when the fingerprint apparatus is attached to the screen 01 for assembly, there is a problem of relatively high costs due to poor attachment, and a limited thickness of the fingerprint apparatus affects a battery capacity or results in an increase in a thickness of the entire device. When the fingerprint apparatus is relatively thick, the fingerprint apparatus can be disposed only above the non-battery region 04. However, a requirement for a large-area in-screen fingerprint cannot be met due to a limited area of the non-battery region 04. In a thickness direction of the electronic device, a direction from the fastening frame to the screen is an upward direction, and a direction from the screen to the fastening frame is a downward direction. The fingerprint apparatus may be located above the battery region 03. It may be understood that the fingerprint apparatus is located above the battery region in the thickness direction of the electronic device, and an orthographic projection of the fingerprint apparatus on the fastening frame is located in a region of an orthographic projection of the battery region on the fastening frame. Correspondingly, the fingerprint apparatus may be located above the non-battery region 04. It may be understood that the fingerprint apparatus is located above the non-battery region in the thickness direction of the electronic device, and an orthographic projection of the fingerprint apparatus on the fastening frame is located in a region of an orthographic projection of the battery region on the fastening frame.

For example, there are usually the following two implementations for an in-screen fingerprint in the prior art:

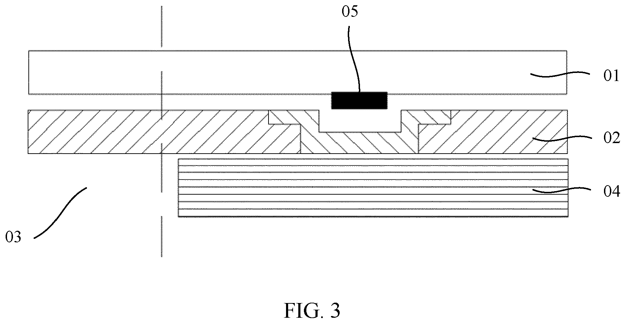

FIG. 2 shows an internal structure of a first fingerprint apparatus 05 in the prior art. The fingerprint apparatus 05 is installed below a screen 01, and includes an image sensor 051 and a collimation component 052. When a human finger presses the screen 01, fingerprint information light of the finger passes through the screen 01, is integrated by the collimation component 052, and then is transmitted to the image sensor 051. The image sensor 051 may recognize fingerprint information. FIG. 3 is a schematic structural diagram in which the fingerprint apparatus 05 in this solution is installed in an electronic device architecture. Only the collimation component 052 with a relatively small size is disposed in the fingerprint apparatus 05 in this solution to fit with the image sensor 051, and therefore the fingerprint apparatus 05 is relatively thin, and may be installed in a battery region 03 or a non-battery region 04. However, in a solution of attaching the fingerprint apparatus 05 to the screen 01, there is a problem that the screen 01 is scrapped due to poor attachment. In addition, if the collimation component 052 of the fingerprint apparatus 05 in this solution is relatively far away from the screen 01, there is relatively low light transmittance, an optical fingerprint image is distorted, and recognition cannot be performed well. Consequently, fingerprint information cannot be normally collected, and normal operation is affected.

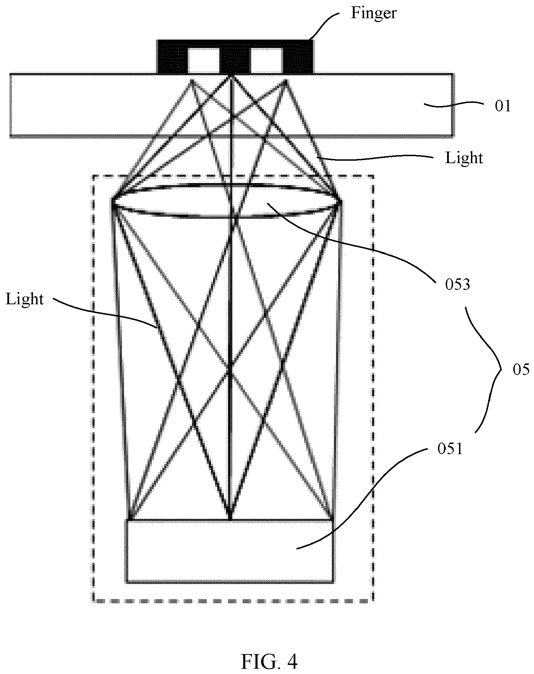

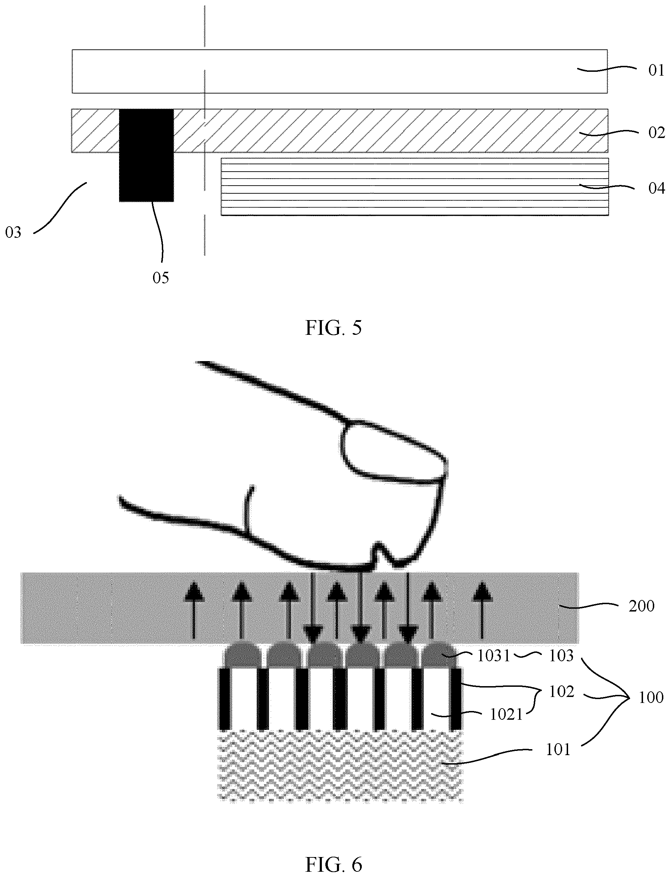

FIG. 4 shows an internal structure of a second fingerprint apparatus 05 in the prior art. The fingerprint apparatus 05 is installed below a screen 01, and includes an image sensor 051 and a lens structure 053 located between the image sensor 051 and the screen 01. When a human finger presses the screen 01, fingerprint information light of the finger passes through the screen 01, is focused by the lens structure 053 for reverse imaging, and then is transmitted to the image sensor 051. The image sensor 051 may recognize fingerprint information. FIG. 5 is a schematic structural diagram in which the fingerprint apparatus 05 in this solution is installed in an electronic device architecture. The lens structure 053 is disposed in the fingerprint apparatus 05 in this solution to fit with the image sensor 051, and therefore a specific distance is required for optical path propagation of the fingerprint apparatus 05 to ensure reverse imaging, that is, the fingerprint apparatus 05 is relatively thick. Therefore the fingerprint apparatus 05 can be installed only in a non-battery region 04.

An embodiment of this application provides a fingerprint apparatus 100. Referring to FIG. 6, the fingerprint apparatus 100 is disposed below a display screen 200 of an electronic device, and includes a fingerprint image sensor 101, and further includes a collimator 102 disposed between the fingerprint image sensor 101 and the display screen 200. A first microlens group 103 is disposed between the collimator 102 and the display screen 200. The first microlens group 103 includes at least one first microlens unit 1031. The first microlens unit 1031 corresponds to a collimator hole 1021 of the collimator 102, and is disposed above the collimator 102. The first microlens unit 1031 is configured to converge fingerprint image light information above the display screen 200 to the collimator hole 1021 of the collimator 102.

In the fingerprint apparatus 100 provided in this embodiment of this application, referring to FIG. 6, the first microlens group 103 is disposed on a side of the collimator 102 that is away from the fingerprint image sensor 101, the first microlens group 103 includes at least one first microlens unit 1031, and the first microlens unit 1031 is disposed corresponding to the collimator hole 1021 of the collimator 102. In this way, when the fingerprint apparatus 100 is relatively far away from the display screen 200, the fingerprint image light information can still be smoothly transmitted to the fingerprint image sensor 101, thereby removing a limitation that the fingerprint apparatus 100 can be installed only through attachment to the screen. In addition, the fingerprint apparatus 100 may be installed at another position without being attached to the screen. An installation position is flexible, and therefore a problem that the screen is scrapped due to installation of the fingerprint apparatus through attachment to the screen can be avoided. In addition, a microlens structure with a relatively small size is used to integrate light, which is different from a reflection imaging solution of a convex lens with a relatively large size of a camera in the solution shown in FIG. 4. Therefore, the entire fingerprint apparatus 100 is relatively thin, and may be flexibly installed at a plurality of positions in small space.

It should be noted that the collimator (collimator) may be made of a material such as a silicon material, glass fiber, or plastic. The collimator is disposed on a surface on a side of the fingerprint sensor, and may be used to block incident light at an angle, to a surface of the fingerprint sensor, that exceeds a specific angle threshold, to ensure that incident light perpendicular to or approximately perpendicular to the surface of the fingerprint sensor is incident on the surface of the fingerprint sensor, so as to improve light utilization and reduce interference from stray light.

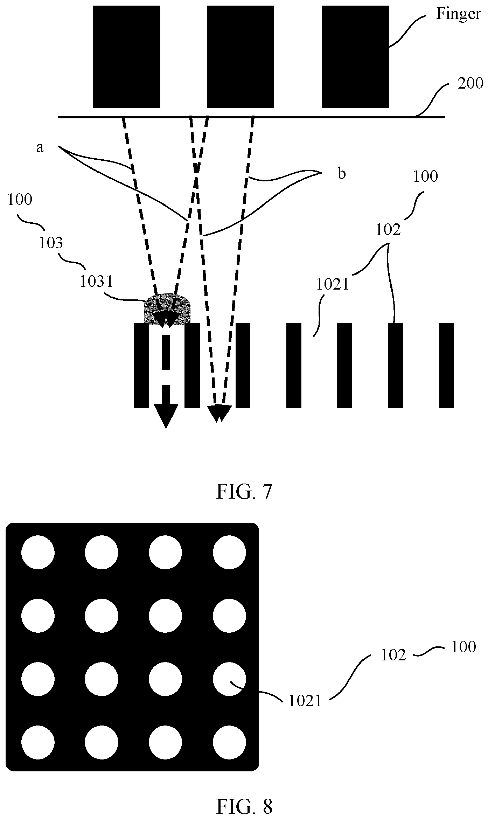

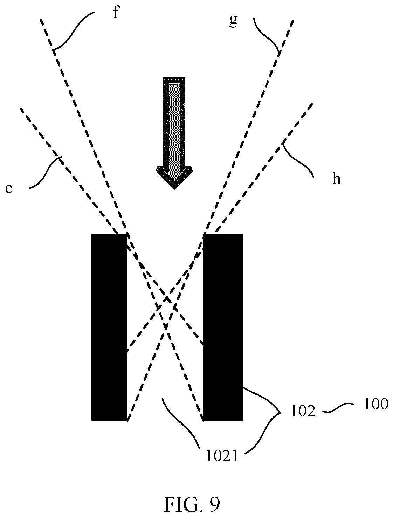

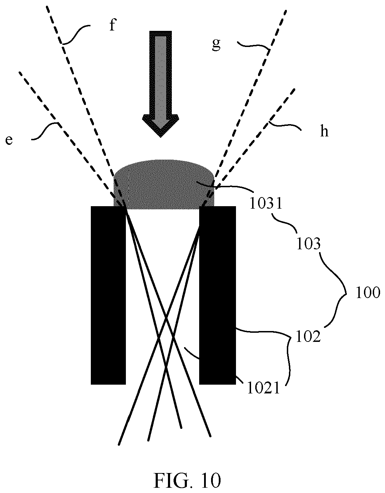

To clearly describe an effect of the fingerprint apparatus 100 provided in this embodiment of this application, referring to FIG. 7, when a finger presses the display screen 200, fingerprint light information is transmitted downward through the collimator hole 1021. A structure of the collimator hole 1021 disposed on the collimator 102 is shown in FIG. 8. For example, further referring to FIG. 7, the fingerprint light information includes light a and light b in the figure. The first microlens unit 1031 is disposed for a collimator hole 1021 to which the light a points, and no first microlens unit 1031 is disposed for a collimator hole 1021 to which the light b points. In this case, the light a is transmitted more efficiently than the light b. Specifically, referring to FIG. 9, when no first microlens unit 1031 is disposed above the collimator hole 1021, in four beams of light e, f, g, and h shown in the figure, light in a range of f and g can be smoothly transmitted from one side of the collimator hole 1021 to the other side, and light outside the range of f and g, for example, the light e and h, cannot be correctly transmitted from one side of the collimator hole 1021 to the other side. In comparison with FIG. 9, referring to FIG. 10, when the first microlens unit 1031 is disposed corresponding to the collimator hole 1021, light (including light f and g) in a range of light e and h is refracted and integrated by the first microlens unit 1031, and can be smoothly transmitted from one side of the collimator hole 1021 to the other side. It may be clearly learned that in comparison with a fingerprint apparatus in which no first microlens unit 1031 is disposed, in the fingerprint apparatus 100 in which the first microlens unit 1031 is disposed, light transmittance is clearly improved. Therefore, when the fingerprint apparatus 100 provided in this embodiment of this application is relatively far away from the display screen 200, the fingerprint apparatus 100 can still normally recognize fingerprint information, and may not need to be attached to the display screen 200 for installation in this case. An installation position is flexible, and therefore a problem that the screen is scrapped due to installation of the fingerprint apparatus through attachment to the screen can be avoided.

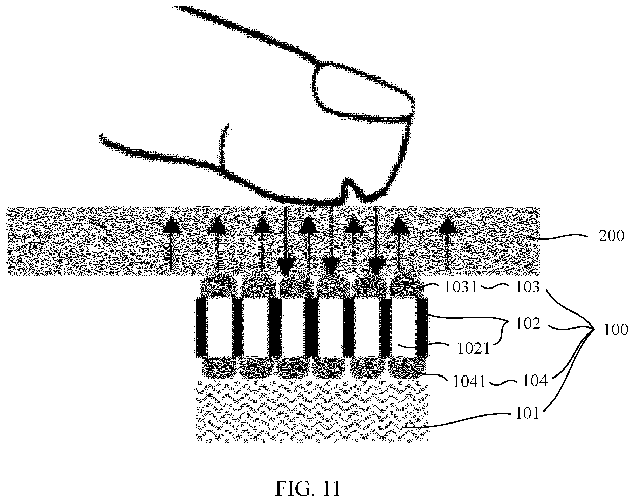

To implement better transmission and imaging of light emitted from the collimator hole 1021, a second microlens group 104 is further disposed between the collimator hole 1021 and the fingerprint image sensor 101. As shown in FIG. 11, the second microlens group 104 includes at least one second microlens unit 1041. The second microlens unit 1041 is disposed corresponding to the collimator hole 1021 of the collimator 102. The second microlens unit 1041 is configured to converge light that passes through the collimator hole 1021 of the collimator 102 to the fingerprint image sensor 101. The first microlens group 103 may converge light that cannot be incident into the collimator hole 1021 or that cannot be transmitted in a straight line into the collimator hole 1021, thereby increasing light transmittance. The second microlens group 104 may converge the light that passes through the collimator hole 1021 to the fingerprint image sensor 101, thereby improving a fingerprint recognition effect.

Referring to FIG. 8, the collimator 102 includes a plurality of collimator holes 1021. To increase light transmittance of each collimator hole 1021, there may be a plurality of first microlens units 1031. Specifically, as shown in FIG. 6, there are a plurality of first microlens units 1031, and the plurality of first microlens units 1031 are disposed in a one-to-one correspondence with the plurality of collimator holes 1021 of the collimator 102.

Similarly, to further converge fingerprint image light information that passes through each collimator hole 1021 to the fingerprint image sensor, there may be a plurality of second microlens units 1041. As shown in FIG. 11, there are a plurality of second microlens units 1041, and the plurality of second microlens units 1041 are disposed in a one-to-one correspondence with the plurality of collimator holes 1021 of the collimator 102.

The first microlens unit 1031 is a convex lens with a light convergence function, and a specific shape and structure of the convex lens may be flexibly adjusted based on an actual optical path requirement and an assembly requirement. As shown in FIG. 6, a side, of the convex lens, that faces the collimator hole is relatively flat to facilitate assembly.

Similarly, the second microlens unit 1041 is a convex lens. The second microlens unit 1041 is a convex lens with a light convergence function, and a specific shape and structure of the convex lens may be flexibly adjusted based on an actual optical path requirement and an assembly requirement. As shown in FIG. 11, a side, of the convex lens, that faces the collimator hole is relatively flat to facilitate assembly.

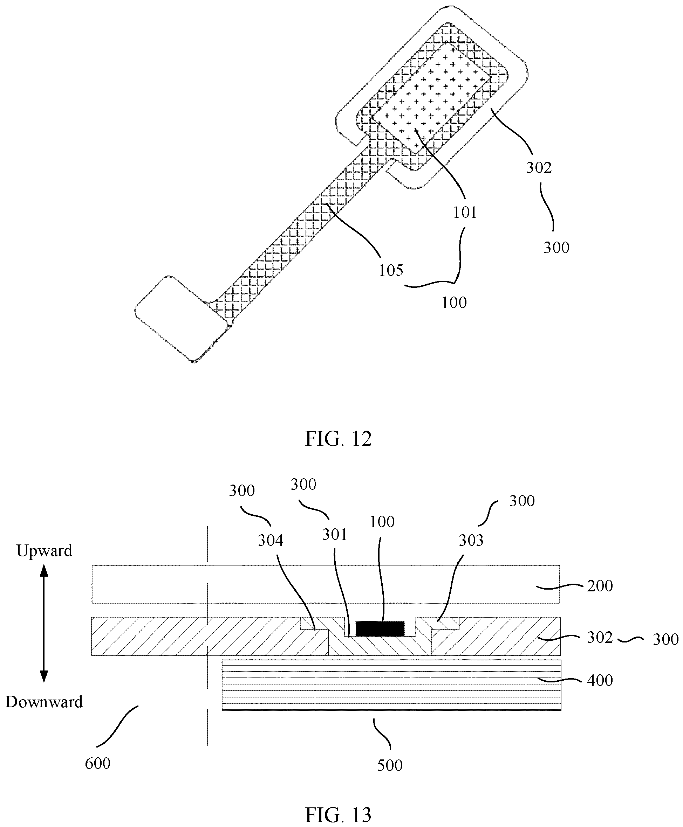

It should be noted that referring to FIG. 12, the convex lenses, namely, the first microlens unit 1031 and the second microlens unit 1041 herein, are disposed corresponding to the collimator hole 1021 of the collimator 102, and are different from the lens structure 053 in the prior art shown in FIG. 4. In comparison with the lens structure 053 for implementing reverse imaging through light focusing in FIG. 4, the first microlens unit 1031 and the second microlens unit 1041 are smaller in size, and are used only to integrate light. Therefore, less impact is exerted on a thickness of the entire fingerprint apparatus 100.

To supply power and transmit a signal to the fingerprint image sensor 101, a corresponding connection structure circuit is usually required, for example, a wire, a signal cable, or a printed circuit board. To facilitate installation and assembly, as shown in FIG. 12, the fingerprint apparatus 100 further includes a flexible circuit board 105 configured to transmit a current and a signal. The fingerprint image sensor 101 is fastened on the flexible circuit board 105. The flexible circuit board 105 may have a relatively large deformation rate, to facilitate assembly on the premise of ensuring power supply and signal transmission.

According to a second aspect, an embodiment of this application further provides an electronic device. As shown in FIG. 13, the electronic device includes a display screen 200. The fingerprint apparatus 100 according to any one of the foregoing technical solutions is disposed at an interval below the display screen 200.

As shown in FIG. 13, the electronic device provided in this embodiment of this application includes the display screen 200. The fingerprint apparatus 100 according to any one of the foregoing technical solutions is disposed at an interval below the display screen 200, and therefore the fingerprint apparatus 100 is not attached to the display screen 200. In this way, a problem that the screen is scrapped due to installation of the fingerprint apparatus through attachment to the screen can be avoided.

To prevent the fingerprint apparatus 100 from coming into contact with the display screen 200 to damage the display screen 200, the fingerprint apparatus 100 and the display screen 200 are usually disposed at an interval during assembly and installation. After testing and calculation, a gap between the display screen 200 and the fingerprint apparatus 100 may be greater than or equal to 0.1 mm.

A corresponding installation support structure such as a middle frame is usually required for fastening the display screen 200 and a plurality of other parts of the electronic device. Therefore, as shown in FIG. 13, the electronic device in this embodiment of this application includes a middle frame 300 located below the display screen 200. The fingerprint apparatus 100 may be fastened to the middle frame 300.

To facilitate fastening of the fingerprint apparatus 100 to the middle frame 300, the fingerprint apparatus 100 is fastened to the middle frame 300 through attachment and bonding.

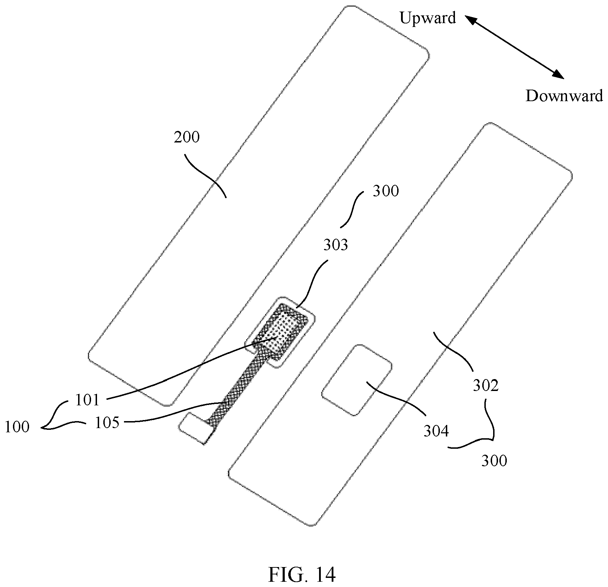

It should be noted that in the electronic device in this embodiment of this application, for ease of description, based on a use habit of the electronic device, the display screen 200 is usually located in an upward direction, to facilitate operation for a user. Therefore, two directions, namely, the upward direction and a downward direction, are determined. Specifically, referring to FIG. 13 and FIG. 14, in a thickness direction of the electronic device, a direction from the middle frame 300 to the display screen 200 is the upward direction, and a direction from the display screen 200 to the middle frame 300 is the downward direction. It may be understood that the display screen 200 includes a light emitting surface and a backlight surface. The light emitting surface may display an image, and the backlight surface is opposite to the light emitting surface. A side close to the backlight surface is below the display screen.

The fingerprint apparatus 100 may be relatively thin, and therefore may be disposed above a battery region or a non-battery region of the electronic device. When the fingerprint apparatus 100 is located above the battery region of the electronic device, if a lower surface of the fingerprint apparatus 100 is lower than a lower surface of the middle frame 300, a battery may be punctured, resulting in a serious consequence of burning the entire device. Therefore, to prevent the fingerprint apparatus 100 from puncturing the battery, referring to FIG. 13, optionally, the lower surface of the middle frame 300 is lower than the lower surface of the fingerprint apparatus 100. Certainly, if a process error can be ensured, the lower surface of the middle frame 300 may be coplanar with the lower surface of the fingerprint apparatus 100.

The fingerprint apparatus 100 and the display screen 200 are disposed at an interval. In addition, during assembly of the display screen 200 and the middle frame 300, to prevent the middle frame 300 from squeezing a display region of the display screen 200, a side edge of the middle frame 300 or another intermediate structure (for example, a plastic frame) is usually connected to a side edge of the display screen 200, to fasten the display screen 200. Therefore, a specific safety gap also needs to be ensured between the middle frame 300 and the display region of the display screen 200. Optionally, the gap is also greater than or equal to 0.1 mm. The fingerprint apparatus 100 is smaller in size relative to the middle frame 300, and is installed on the middle frame 300, and then the middle frame 300 is assembled with the display screen 200. In this way, it is not easy to control the gap between the fingerprint apparatus 100 and the display screen 200. Therefore, this can be easily implemented by using a distance between the middle frame 300 and the display screen 200 as a reference standard during installation. On this basis, as shown in FIG. 13, provided that it is ensured that an upper surface of the middle frame 300 is higher than an upper surface of the fingerprint apparatus 100, it can be ensured, by considering only the distance between the middle frame 300 and the display screen 200 during installation, that there is a sufficient gap between the display screen 200 and each of the middle frame 300 and the fingerprint apparatus 100.As shown in FIG. 13, to reduce a thickness of the entire electronic device, a groove 301 is disposed downward at a position, on the upper surface of the middle frame 300, corresponding to the fingerprint apparatus 100. The fingerprint apparatus 100 is fastened in the groove 301.

Assembly of a plurality of electrical elements needs to be considered in the middle frame 300, and therefore a plurality of structures need to be considered in structure design and layout of the middle frame 300. To facilitate manufacturing of the middle frame 300, some installation positions are usually reserved, and then adapted installation parts are manufactured separately to install the electrical elements. For example, as shown in FIG. 13, the middle frame 300 includes a middle frame body 302 and a middle frame support member 303. The groove 301 is disposed on the middle frame support member 303. A mounting hole 304 is disposed on the middle frame body 302. The middle frame support member 303 is disposed in the mounting hole 304.

To prevent the middle frame support member 303 from falling from the mounting hole 304, as shown in FIG. 13, the mounting hole 304 is a stepped hole disposed downward along the middle frame body 302, and an outer profile of a lower surface of the middle frame support member 303 matches the stepped hole. Fitting with the stepped hole may play a limiting role to prevent the middle frame support member 303 from falling from the mounting hole 304.

As shown in FIG. 13, the electronic device in this embodiment of this application includes a battery module 400 disposed below the middle frame 300. There are a battery region 500 and a non-battery region 600 below the middle frame 300. The battery module 400 is disposed in the battery region 500. The fingerprint apparatus 100 is located above the battery region 500, or the fingerprint apparatus 100 is located above the non-battery region 600, or the fingerprint apparatus 100 is located above the battery region 500 and the non-battery region.

That the fingerprint apparatus is disposed above the battery region 500 may be understood as follows: The fingerprint apparatus is located above the non-battery region in the thickness direction of the electronic device, and an orthographic projection of the fingerprint apparatus on the middle frame 300 is located in a region of an orthographic projection of the battery region 500 on the middle frame 300. Correspondingly, that the fingerprint apparatus is disposed above the non-battery region 600 may be understood as follows: The fingerprint apparatus is located above the non-battery region in the thickness direction of the electronic device, and an orthographic projection of the fingerprint apparatus on the middle frame 300 is located in a region of an orthographic projection of the non-battery region 600 on the middle frame 300. Correspondingly, that the fingerprint apparatus is disposed above the battery region 500 and the non-battery region 600 may be understood as follows: The fingerprint apparatus is located above the battery region 500 and the non-battery region 600 in the thickness direction of the electronic device, and an orthographic projection of the fingerprint apparatus on the middle frame 300 is located in a region of an orthographic projection of the battery region on the middle frame 300 and a region of an orthographic projection of the non-battery region on the middle frame 300.

As shown in FIG. 13, a bottom surface of the fingerprint apparatus 100 is fastened to a bottom surface of the groove 301 through attachment. To prevent a side wall of the groove 301 from damaging the fingerprint apparatus 100 in an installation process, there is an avoidance gap between a side wall of the fingerprint apparatus 100 and the side wall of the groove 301.

Optionally, the avoidance gap is greater than or equal to 0.3 mm.

The middle frame body 302 and the middle frame support member 303 may fit with each other in a manner of using the mounting hole 304 in the foregoing solution. Certainly, there may be another manner based on a space requirement and a structural requirement. For example, a manner of slotting the middle frame body 302 is used. In the manner of slotting the middle frame body 302, the fingerprint apparatus 100 is located in a slot, that is, the middle frame body 302 is not penetrated through by the slot. For the middle frame body 302, there is a slotting manner for receiving a structure of the fingerprint apparatus 100. Specifically, the middle frame 300 includes the middle frame body 302 and the middle frame support member 303. The groove 301 is disposed on the middle frame support member 303, an assembly slot is disposed on the middle frame body 302, and the middle frame support member 303 is disposed in the assembly slot. Optionally, the middle frame body 302 may be punctured, and a peripheral wall of the fingerprint apparatus 100 is fastened to a side wall of a hole through attachment. When a thickness of the middle frame body is the same as a thickness of the fingerprint apparatus 100, the thickness of the electronic device may be reduced.

It should be noted that the middle frame body 302 is usually made of an aluminum alloy material, and the middle frame support member 303 may be made of any one of an aluminum alloy material, a steel sheet, an FR4 resin material whose strength meets a requirement, or the like.

According to a third aspect, an embodiment of this application further provides a manufacturing method. The method is used to manufacture the electronic device according to any one of the foregoing technical solutions, and includes the following steps:
fastening a fingerprint apparatus 100 to a middle frame 300; and
fastening a display screen 200 to the middle frame 300, where the display screen 200 is located above the fingerprint apparatus 100.

The manufacturing method provided in this embodiment of this application is used to manufacture the electronic device according to any one of the foregoing technical solutions. The fingerprint apparatus 100 is fastened to the middle frame 300, and therefore a problem that the screen is scrapped due to installation of the fingerprint apparatus through attachment to the screen can be avoided.

Referring to FIG. 13 and FIG. 14, when the electronic device includes a battery module 400 disposed below the middle frame 300, there are a battery region 500 and a non-battery region 600 below the middle frame 300. The battery module 400 is disposed in the battery region 500. The fastening a fingerprint apparatus 100 to a middle frame 300 includes:
installing the fingerprint apparatus 100 above the battery region 500, or
installing the fingerprint apparatus 100 above the non-battery region 600, or
installing the fingerprint apparatus 100 above the battery region 500 and the non-battery region 600.

Referring to FIG. 13 and FIG. 14, the fingerprint apparatus 100 is fastened to the middle frame 300, and the middle frame 300 includes a middle frame body 302 and a middle frame support member 303. In this way, the fingerprint apparatus 100 may be fastened to the middle frame 300 in different assembly sequences.

The fastening a fingerprint apparatus 100 to a middle frame 300 includes:
separately and sequentially assembling and fastening the middle frame body 302, the middle frame support member 303, and the fingerprint apparatus 100; or
assembling the middle frame support member 303 and the fingerprint apparatus 100 as a whole, and then fastening the middle frame body 302 to the middle frame support member 303; or
assembling the middle frame body 302 and the middle frame support member 303, and then fastening the fingerprint apparatus 100 to the middle frame support member 303.

In the solution in which the middle frame body 302, the middle frame support member 303, and the fingerprint apparatus 100 are separately and sequentially assembled and fastened, the fingerprint apparatus 100, the middle frame support member 303, and the middle frame body 302 are independent of each other, and the fingerprint apparatus 100, the middle frame support member 303, and the middle frame body 302 need to be sequentially assembled. The middle frame support member 303 may be made of a same material as the middle frame body 303, for example, a stainless steel material. A specific shape may be formed through stamping or CNC (Computerized Numerical Control, computer numerical control) processing based on a process requirement. In this solution, the components are independent and easy to process, but there are many process and assembly steps.

In the solution in which the middle frame support member 303 and the fingerprint apparatus 100 are assembled as a whole, and then the middle frame body 302 is fastened to the middle frame support member 303, the fingerprint apparatus 100 and the middle frame support member 303 are combined as an integrated component. In this way, in a manufacturing process procedure, the fingerprint apparatus 100 and the middle frame support member 303 are first assembled into an integrated component, and then are directly assembled with the paired middle frame body 302. The middle frame support member 303 may be used as a steel stiffener of the fingerprint apparatus 100, and may be pressed with the fingerprint apparatus 100 to form an integrated component, and then the display screen 200 is assembled. In this solution, process and assembly steps are reduced, and module reliability is improved by using the middle frame support member 303.

In the solution in which the middle frame body 302 and the middle frame support member 303 are assembled as a whole, and then the fingerprint apparatus 100 is fastened to the middle frame support member 303, the middle frame support member 303 and the middle frame body 302 are combined as an integrated incoming material, the middle frame body 302 may be partially etched or stamped in a fingerprint attachment region to reduce a thickness, then the fingerprint apparatus 100 is directly attached to the integrated middle frame 300 for assembly, and finally the display screen 200 is assembled. In this solution, process and assembly steps are also reduced, but it is relatively difficult to process the middle frame 300.

In the descriptions of this specification, specific features, structures, materials, or characteristics may be combined in a proper manner in any one or more of the embodiments or examples.

## Claims

1. A fingerprint apparatus, comprising a fingerprint image sensor and a collimator located on a side of the fingerprint image sensor, wherein a first microlens group is disposed on a side of the collimator that is away from the fingerprint image sensor, the first microlens group comprises at least one first microlens unit, the first microlens unit is disposed corresponding to a collimator hole of the collimator, and the first microlens unit is configured to converge light on the side of the collimator that is away from the fingerprint image sensor to the collimator hole of the collimator;
wherein a second microlens group is further disposed between the collimator and the fingerprint image sensor, the second microlens group comprises at least one second microlens unit, the second microlens unit is disposed corresponding to the collimator hole of the collimator, and the second microlens unit is configured to converge light that passes through the collimator hole of the collimator to the fingerprint image sensor;
wherein the first microlens unit is a convex lens with a light convergence function, the side of the first microlens unit facing the collimator hole being flat;
wherein the second microlens unit is a convex lens with a light convergence function, the side of the second microlens unit facing the collimator hole being flat.

2. The fingerprint apparatus according to claim 1, wherein there are a plurality of first microlens units, the collimator comprises a plurality of collimator holes, and the plurality of first microlens units are disposed in a one-to-one correspondence with the plurality of collimator holes of the collimator.

3. The fingerprint apparatus according to claim 1 or 2, wherein there are a plurality of second microlens units, the collimator comprises a plurality of collimator holes, and the plurality of second microlens units are disposed in a one-to-one correspondence with the plurality of collimator holes of the collimator.

4. The fingerprint apparatus according to any one of claims 1 to 3, further comprising a flexible circuit board configured to transmit a current and a signal, wherein the fingerprint image sensor is fastened on the flexible circuit board.

5. An electronic device, comprising a display screen, wherein the fingerprint apparatus according to any one of claims 1 to 4 is disposed at an interval below the display screen.

6. The electronic device according to claim 5, comprising a middle frame located below the display screen, wherein the fingerprint apparatus is fastened to the middle frame.

7. The electronic device according to claim 6, wherein the fingerprint apparatus is fastened to the middle frame through attachment and bonding.

8. The electronic device according to claim 6 or 7, wherein a lower surface of the middle frame is lower than a lower surface of the fingerprint apparatus.

9. The electronic device according to any one of claims 6 to 8, wherein an upper surface of the middle frame is higher than an upper surface of the fingerprint apparatus.

10. The electronic device according to any one of claims 6 to 9, wherein a groove is disposed downward at a position, on the upper surface of the middle frame, corresponding to the fingerprint apparatus, and the fingerprint apparatus is fastened in the groove.

11. The electronic device according to claim 10, wherein the middle frame comprises a middle frame body and a middle frame support member, the groove is disposed on the middle frame support member, a mounting hole is disposed on the middle frame body, and the middle frame support member is disposed in the mounting hole.

12. The electronic device according to claim 11, wherein the mounting hole is a stepped hole disposed downward along the middle frame body, and an outer profile of a lower surface of the middle frame support member matches the stepped hole.

13. The electronic device according to any one of claims 6 to 12, comprising a battery module disposed below the middle frame, wherein there are a battery region and a non-battery region below the middle frame, the battery module is disposed in the battery region, and the fingerprint apparatus is located above the battery region, the fingerprint apparatus is located above the non-battery region, or the fingerprint apparatus is located above the battery region and the non-battery region.

## Patentansprüche

1. Fingerabdruckgerät, umfassend einen Fingerabdruckbildsensor und einen sich auf einer Seite des Fingerabdruckbildsensors befindlichen Kollimator, wobei eine erste Mikrolinsengruppe auf einer von dem Fingerabdruckbildsensor abgewandten Seite des Kollimators angeordnet ist, die erste Mikrolinsengruppe mindestens eine erste Mikrolinseneinheit umfasst, die erste Mikrolinseneinheit in Korrespondenz zu einem Kollimatorloch des Kollimators angeordnet ist und die erste Mikrolinseneinheit dazu konfiguriert ist, Licht auf der von dem Fingerabdruckbildsensor abgewandten Seite des Kollimators zu dem Kollimatorloch des Kollimators zu bündeln;
wobei zwischen dem Kollimator und dem Fingerabdruckbildsensor ferner eine zweite Mikrolinsengruppe angeordnet ist, die zweite Mikrolinsengruppe mindestens eine zweite Mikrolinseneinheit umfasst, die zweite Mikrolinseneinheit in Korrespondenz zu dem Kollimatorloch des Kollimators angeordnet ist und die zweite Mikrolinseneinheit dazu konfiguriert ist, durch das Kollimatorloch des Kollimators hindurchtretendes Licht zu dem Fingerabdruckbildsensor zu bündeln;
wobei die erste Mikrolinseneinheit eine konvexe Linse mit einer Lichtbündelungsfunktion ist, wobei die dem Kollimatorloch zugewandte Seite der ersten Mikrolinseneinheit flach ist;
wobei die zweite Mikrolinseneinheit eine konvexe Linse mit einer Lichtbündelungsfunktion ist, wobei die dem Kollimatorloch zugewandte Seite der zweiten Mikrolinseneinheit flach ist.

2. Fingerabdruckgerät nach Anspruch 1, wobei eine Vielzahl von ersten Mikrolinseneinheiten vorhanden ist, der Kollimator eine Vielzahl von Kollimatorlöchern umfasst und die Vielzahl von ersten Mikrolinseneinheiten in einer Eins-Zu-Eins-Korrespondenz zu der Vielzahl von Kollimatorlöchern des Kollimators angeordnet ist.

3. Fingerabdruckgerät nach Anspruch 1 oder 2, wobei eine Vielzahl von zweiten Mikrolinseneinheiten vorhanden ist, der Kollimator eine Vielzahl von Kollimatorlöchern umfasst und die Vielzahl von zweiten Mikrolinseneinheiten in einer Eins-Zu-Eins-Korrespondenz zu der Vielzahl von Kollimatorlöchern des Kollimators angeordnet ist.

4. Fingerabdruckgerät nach einem der Ansprüche 1 bis 3, ferner umfassend eine flexible Leiterplatte, die zum Übertragen eines Stroms und eines Signals konfiguriert ist, wobei der Fingerabdruckbildsensor auf der flexiblen Leiterplatte befestigt ist.

5. Elektronische Vorrichtung, umfassend einen Anzeigebildschirm, wobei das Fingerabdruckgerät nach einem der Ansprüche 1 bis 4 mit einem Abstand unterhalb des Anzeigebildschirms angeordnet ist.

6. Elektronische Vorrichtung nach Anspruch 5, umfassend einen unterhalb des Anzeigebildschirms befindlichen Mittelrahmen, wobei das Fingerabdruckgerät an dem Mittelrahmen befestigt ist.

7. Elektronische Vorrichtung nach Anspruch 6, wobei das Fingerabdruckgerät durch Verbinden und Verkleben an dem Mittelrahmen befestigt ist.

8. Elektronische Vorrichtung nach Anspruch 6 oder 7, wobei eine untere Oberfläche des Mittelrahmens weiter unten als eine untere Oberfläche des Fingerabdruckgeräts ist.

9. Elektronische Vorrichtung nach einem der Ansprüche 6 bis 8, wobei eine obere Oberfläche des Mittelrahmens weiter oben als eine obere Oberfläche des Fingerabdruckgeräts ist.

10. Elektronische Vorrichtung nach einem der Ansprüche 6 bis 9, wobei auf der oberen Oberfläche des Mittelrahmens abwärts einer mit dem Fingerabdruckgerät korrespondierenden Position, eine Nut angeordnet ist und das Fingerabdruckgerät in der Nut befestigt ist.

11. Elektronische Vorrichtung nach Anspruch 10, wobei der Mittelrahmen einen Mittelrahmenkörper und ein Mittelrahmentragelement umfasst, die Nut auf dem Mittelrahmentragelement angeordnet ist, ein Montageloch an dem Mittelrahmenkörper angeordnet ist und das Mittelrahmentragelement in dem Montageloch angeordnet ist.

12. Elektronische Vorrichtung nach Anspruch 11, wobei das Montageloch ein gestuftes Loch ist, das abwärts entlang des Mittelrahmenkörpers angeordnet ist, und ein Außenprofil einer unteren Oberfläche des Mittelrahmentragelements mit dem Stufenloch übereinstimmt.

13. Elektronische Vorrichtung nach einem der Ansprüche 6 bis 12, umfassend ein Batteriemodul, das unterhalb des Mittelrahmens angeordnet ist, wobei sich unterhalb des Mittelrahmens ein Batteriebereich und ein Nichtbatteriebereich befinden, das Batteriemodul in dem Batteriebereich angeordnet ist und sich das Fingerabdruckgerät oberhalb des Batteriebereichs befindet, sich das Fingerabdruckgerät oberhalb des Nichtbatteriebereichs befindet oder sich das Fingerabdruckgerät oberhalb des Batteriebereichs und des Nichtbatteriebereichs befindet.

## Revendications

1. Appareil d'empreintes digitales, comprenant un capteur d'image d'empreintes digitales et un collimateur situé sur un côté du capteur d'image d'empreintes digitales, dans lequel un premier groupe de microlentilles est disposé sur un côté du collimateur qui est éloigné du capteur d'image d'empreintes digitales, le premier groupe de microlentilles comprend au moins une première unité de microlentilles, la première unité de microlentilles est disposée en correspondance avec un trou de collimateur du collimateur, et la première unité de microlentilles est configurée pour faire converger la lumière du côté du collimateur qui est éloigné du capteur d'image d'empreintes digitales vers le trou de collimateur du collimateur ;
dans lequel un second groupe de microlentilles est en outre disposé entre le collimateur et le capteur d'image d'empreintes digitales, le second groupe de microlentilles comprend au moins une seconde unité de microlentilles, la seconde unité de microlentilles est disposée en correspondance avec le trou de collimateur du collimateur, et la seconde unité de microlentilles est configurée pour faire converger la lumière qui passe à travers le trou de collimateur vers le capteur d'image d'empreintes digitales ;
dans lequel la première unité de microlentilles est une lentille convexe avec une fonction de convergence de lumière, le côté de la première unité de microlentilles faisant face au trou de collimateur étant plat ;
dans lequel la seconde unité de microlentilles est une lentille convexe avec une fonction de convergence de lumière, le côté de la seconde unité de microlentilles faisant face au trou de collimateur étant plat.

2. Appareil d'empreintes digitales selon la revendication 1, dans lequel il y a une pluralité de premières unités de microlentilles, le collimateur comprend une pluralité de trous de collimateur, et la pluralité de premières unités de microlentilles sont disposées en correspondance biunivoque avec la pluralité de trous de collimateur du collimateur.

3. Appareil d'empreintes digitales selon la revendication 1 ou 2, dans lequel il y a une pluralité de secondes unités de microlentilles, le collimateur comprend une pluralité de trous de collimateur, et la pluralité de secondes unités de microlentilles sont disposées en correspondance biunivoque avec la pluralité de trous de collimateur du collimateur.

4. Appareil d'empreintes digitales selon l'une quelconque des revendications 1 à 3, comprenant en outre une carte de circuit imprimé flexible configurée pour transmettre un courant et un signal, dans lequel le capteur d'image d'empreintes digitales est fixé sur la carte de circuit imprimé flexible.

5. Dispositif électronique, comprenant un écran d'affichage, dans lequel l'appareil d'empreintes digitales selon l'une quelconque des revendications 1 à 4 est disposé à un intervalle en dessous de l'écran d'affichage.

6. Dispositif électronique selon la revendication 5, comprenant un cadre intermédiaire situé sous l'écran d'affichage, dans lequel l'appareil d'empreintes digitales est fixé au cadre intermédiaire.

7. Dispositif électronique selon la revendication 6, dans lequel l'appareil d'empreintes digitales est fixé au cadre intermédiaire par fixation et liaison.

8. Dispositif électronique selon la revendication 6 ou 7, dans lequel une surface inférieure du cadre intermédiaire est inférieure à une surface inférieure de l'appareil d'empreintes digitales.

9. Dispositif électronique selon l'une quelconque des revendications 6 à 8, dans lequel une surface supérieure du cadre intermédiaire est plus haute qu'une surface supérieure de l'appareil d'empreintes digitales.

10. Dispositif électronique selon l'une quelconque des revendications 6 à 9, dans lequel une rainure est disposée vers le bas au niveau d'une position, sur la surface supérieure du cadre intermédiaire, correspondant à l'appareil d'empreintes digitales, et l'appareil d'empreintes digitales est fixé dans la rainure.

11. Dispositif électronique selon la revendication 10, dans lequel le cadre intermédiaire comprend un corps de cadre intermédiaire et un élément de support de cadre intermédiaire, la rainure est disposée sur l'élément de support de cadre intermédiaire, un trou de montage est disposé sur le corps de cadre intermédiaire, et l'élément de support de cadre intermédiaire est disposé dans le trou de montage.

12. Dispositif électronique selon la revendication 11, dans lequel le trou de montage est un trou étagé disposé vers le bas le long du corps de cadre intermédiaire, et un profil externe d'une surface inférieure de l'élément de support de cadre intermédiaire correspond au trou étagé.

13. Dispositif électronique selon l'une quelconque des revendications 6 à 12, comprenant un module de batterie disposé en dessous du cadre intermédiaire, dans lequel il y a une région de batterie et une région sans batterie en dessous du cadre intermédiaire, le module de batterie est disposé dans la région de batterie, et l'appareil d'empreintes digitales est situé au-dessus de la région de batterie, l'appareil d'empreintes digitales est situé au-dessus de la région sans batterie, ou l'appareil d'empreintes digitales est situé au-dessus de la région de batterie et de la région sans batterie.
